# DEMANDE DE BREVET EUROPEEN

(11) **EP 1 413 485 A1**
(43) Date de publication de la demande: **28.04.2004**
(21) Numéro de dépôt: 03292076.1
(22) Date de dépôt: 22.08.2003
(51) Int. Cl.: B60R 11/00, B60R 11/06, B60P 3/36, B60P 3/14

(54) **Véhicule automobile présentant un ou plusieurs éléments de rangement**

(30) Priorité: 20.09.2002 FR 0211644
(71) Demandeur: SOCIETE FRANCAISE DES ASCENSEURS KONE, 92661 Asnieres sue Seine Cedex (FR)
(72) Inventeur: Meunier, Gilles, 06500 Menton (FR)
(74) Mandataire: Jacquard, Philippe Jean-Luc

(57) **Abrégé**

L'invention concerne un véhicule automobile (1) comportant au moins un élément de rangement (4) accessible par une face (41) pourvue d'au moins un dispositif d'accès tel qu'une porte ou un tiroir (42). Il est caractérisé en ce que cette face (41) est dirigée vers le compartiment avant (3) du véhicule (1) et est située à proximité d'au moins un siège, avant (2) du véhicule (1), qui est rabattable et/ou déplaçable en translation.

## Description

La présente invention a pour objet un véhicule, notamment un véhicule utilitaire, présentant un ou plusieurs éléments de rangement, par exemple un ou plusieurs éléments à tiroir, et qui est susceptible d'être utilisé dans des opérations d'installation et/ou de maintenance pour lesquelles le véhicule doit contenir un assortiment d'outils et de pièces par exemple des pièces de rechange, adapté aux diverses missions sur le terrain.

En général, on stocke les outils et les pièces à l'arrière du véhicule, ce qui fait que l'arrière du véhicule est peu utilisable pour d'autres fonctions, et de plus, l'accès à ces stockages est souvent peu ergonomique.

Or, les interventions, notamment en maintenance, impliquent des accès fréquents et il est donc particulièrement souhaitable que notamment l'ergonomie soit améliorée.

L'invention a pour objet un véhicule dans lequel l'accès à un ou plusieurs des éléments de rangement est organisé de manière à libérer de l'espace à l'arrière du véhicule.

Un autre but de l'invention est d'améliorer l'ergonomie d'accès au contenu du ou des éléments de rangement. Un autre but est enfin de procurer un avantage sur le plan de la sécurité.

L'invention concerne ainsi un véhicule automobile comportant au moins un élément de rangement accessible par une face pourvue d'au moins un dispositif d'accès tel qu'un tiroir ou une porte, dans lequel cette face est dirigée vers le compartiment avant du véhicule et est situé à proximité d'au moins un siège avant du véhicule qui est rabattable et/ou mobile en translation.

Un dit dispositif d'accès est avantageusement un tiroir dont l'ouverture est possible lorsqu'au moins un siège avant est en position rabattue et/ou avancée.

Il peut y avoir un ou plusieurs blocs à tiroirs qui constituent autant d'éléments de rangement, et ce ou ces éléments de rangement peuvent occuper la largeur du véhicule.

Il est particulièrement avantageux de prévoir un dispositif de blocage pour empêcher, en position de verrouillage, l'ouverture du ou des dispositifs d'accès.

De la sorte, les dispositifs d'accès, notamment des tiroirs, restent dans leur logement en cas de freinage ou de choc.

Dans sa position non verrouillée, le dispositif de verrouillage peut bloquer ou gêner le déplacement d'un élément de conduite de véhicule, par exemple le levier de changement de vitesse, ce qui fait que le véhicule ne peut être utilisé que si le dispositif de blocage est en position de verrouillage qui empêche l'ouverture du ou des dispositifs d'accès.

Le dispositif de blocage est avantageusement une barre, notamment une barre rabattable. Selon un mode de réalisation préféré, en position rabattue, la barre bloque ledit élément de conduite du véhicule.

Selon un mode de réalisation préféré, la barre est située entre les sièges avant et l'élément de conduite est le levier de changement de vitesse.

D'autres caractéristiques et avantages de l'invention apparaîtront mieux à la lecture de la description ci-après, en liaison avec les dessins ci-après, lesquels illustrent un mode de réalisation préféré de l'invention.

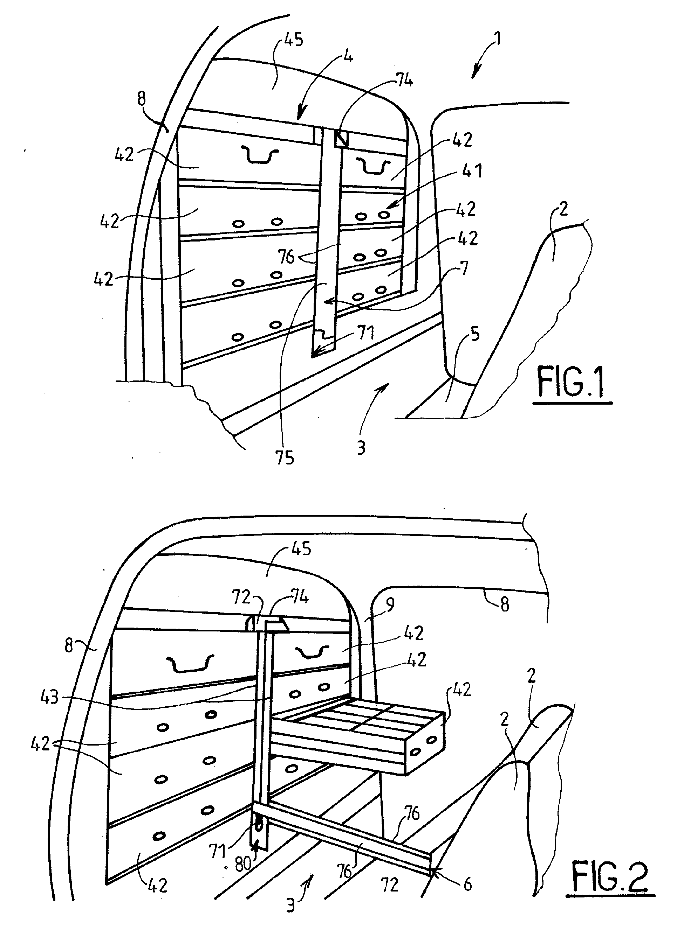

La figure 1 montre en perspective la partie avant d'un véhicule selon l'invention, avec une barre de verrouillage en position de verrouillage, alors que la figure 2 montre la partie avant de ce même véhicule, avec la barre de verrouillage en position déverrouillée.

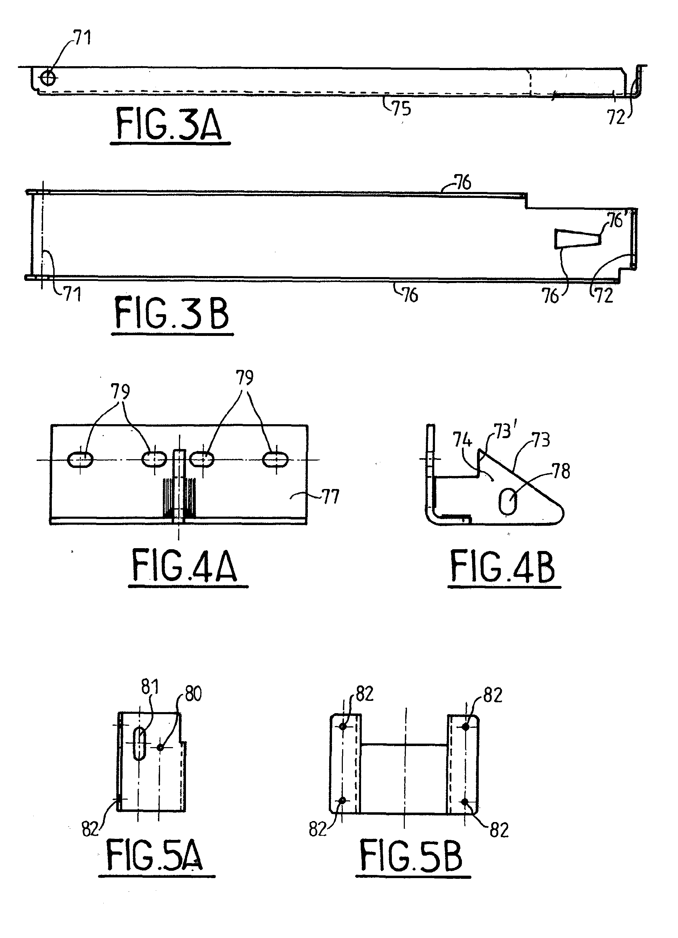

Les figures 3A et 3B représentent la barre de verrouillage en vue latérale et en vue de dessus. Les figures 4A et 4B représentent en vue de face et en vue latérale un dispositif de verrouillage pour ladite barre, et les figures 5A et 5B représentent en vue latérale et en vue de gauche le support inférieur auquel le levier est articulé.

Le véhicule 1 représenté aux figures 1 et 2 présente des sièges avant qui, pour la facilité de la représentation sont en position rabattue, et avancée par coulissement le long de glissières (non représentées) disposées sur le plancher 5 du véhicule.

Dans cette position, un maximum d'espace est dégagé dans l'habitacle avant 3 du véhicule.

Une armoire 4 formant un bloc à tiroirs est solidarisée au véhicule 1 et elle présente une face avant 41 qui donne dans l'habitacle avant 3. En particulier cette face avant 41 peut se situer à proximité immédiate (par exemple quelques centimètres) de l'arrière des sièges avant 2 en position reculée et relevée. Dans l'exemple représenté, l'armoire 4 se s'étend pas jusqu'au plafond du véhicule. Elle est par exemple surmontée d'un grillage 45.

A la figure 1, une barre rabattable 7 est articulée en 71 à son extrémité inférieure et est maintenue à sa partie supérieure 72 par un dispositif de verrouillage 74. La barre 7 est en contact avec les bords internes 43 des tiroirs 42, ce qui les maintient en position fermée, notamment en cas de freinage ou de choc. Une fois déverrouillée, la barre 7 pivote sous l'action de son propre poids et vient en appui à son extrémité 72 sur le levier 6 de changement de vitesse du véhicule, ce qui en bloque le fonctionnement.

De la sorte, lorsque l'intervention est terminée, le véhicule 1 ne peut pas être conduit tant que la barre 7 (disposée entre les sièges avant 2) n'a pas été relevée et bloquée par le verrou 74. A défaut de ce verrouillage, la barre 7 pivoterait sous l'action de son poids. Le véhicule ne peut donc être conduit que si le verrouillage des tiroirs 42 a été assuré.

Au cours d'une intervention (figure 2), les tiroirs 42 peuvent être ouverts et refermés à volonté, et on voit que l'espace 3 ménagé à l'avant entre les encadrements de portes 8 permet un accès aisé et ergonomique au contenu des tiroirs 42 (et/ou éventuellement d'un ou plusieurs compartiments accessibles par des portes ou des abattants).

Comme représenté aux figures 3A et 3B, la barre 7 se présente sous la forme d'un profilé en U ayant un dos 75 et deux ailes 76. A l'opposé de l'axe d'articulation 71, est disposée une ouverture 76 en Δ dont l'extrémité 76' est destinée à coopérer avec le verrou 74. L'extrémité 72 de la barre 7 est repliée à 90°, et en position de la figure 2, elle vient en appui sur le levier de la vitesse 6. Le verrou 74 est constitué par un crochet 74 soudé sur une équerre 77 fixée par des vis passant par les trous oblongs 79 sur la partie supérieure du meuble à tiroirs 4. La rampe 73 et le décrochement 73' coopèrent avec l'extrémité 76' de l'ouverture 76. Pour permettre le déplacement du bord 76' de l'ouverture 76 du levier 7 le long de la rampe 73, l'axe 71 est monté dans une ouverture 81 d'un support inférieur 80 (figures 5A, 5B), fixé par vis à la partie inférieure du meuble 4, à travers les trous 82.

L'ouverture 81 est oblongue dans une direction verticale pour permettre ledit déplacement le long de la rampe 73.

Il peut être prévu un dispositif tel qu'un cadenas, placé par exemple dans l'ouverture 78, solidarisant le levier 7 et le verrou 74.

## Revendications

1. Véhicule automobile comportant au moins un élément de rangement accessible par une face pourvue d'au moins un dispositif d'accès tel qu'une porte ou un tiroir, **caractérisé en ce que** cette face (41) est dirigée vers le compartiment avant (3) du véhicule (1) et est située à proximité d'au moins un siège avant (2) du véhicule (1), qui est rabattable et/ou déplaçable en translation.

2. Véhicule selon la revendication 1, **caractérisé en ce qu'**au moins un dit dispositif d'accès est un tiroir (42) dont l'ouverture est possible lorsqu'au moins un siège avant (2) est en position rabattue et/ou avancée.

3. Véhicule selon la revendication 2, **caractérisé en ce qu'**il comporte au moins un bloc à tiroirs (4) constituant un dit élément de rangement.

4. Véhicule selon les revendications 1 à 3, **caractérisé en ce que** la largeur du véhicule est occupée par un ou plusieurs éléments de rangement.

5. Véhicule selon une des revendications précédentes, **caractérisé en ce qu'**il comporte un dispositif de blocage (7) pour empêcher en position de verrouillage l'ouverture du ou des dispositifs d'accès (42).

6. Véhicule selon la revendication 5, **caractérisé en ce que** le dispositif de blocage (7) présente une position déverrouillée dans laquelle il gêne ou bloque le déplacement d'un élément de conduite du véhicule (1).

7. Véhicule selon une des revendication 5 ou 6, **caractérisé en ce que** le dispositif de blocage est une barre (7).

8. Véhicule selon la revendication 7, **caractérisé en ce que** la barre (7) est rabattable.

9. Véhicule selon la revendication 8, **caractérisé en ce qu'**en position rabattue, la barre (7) bloque un élément de conduite du véhicule.

10. Véhicule selon la revendication 9, **caractérisé en ce que** la barre (7) est située entre les sièges avant (2) et **en ce que** ledit élément de conduite est le levier de changement de vitesse (6).
